# EUROPÄISCHE PATENTSCHRIFT

(11) **EP 0 616 342 B1**
(45) Veröffentlichungstag und Bekanntmachung des Hinweises auf die Patenterteilung: **26.08.1998**
(21) Anmeldenummer: 93104399.6
(22) Anmeldetag: 18.03.1993
(51) Int. Cl.: H01G 9/02

(54) **Metallband für einen Elektrolytkondensator, Elektrode für einen Elektrolytkondensator sowie Verfahren zu deren Herstellung**
Metal strip for an electrolytic capacitor, electrode for electrolytic capacitor and manufacturing method
Bande métallique pour un condensateur électrolytique, électrode pour un condensateur électrolytique et sa méthode de fabrication

(43) Veröffentlichungstag der Anmeldung: 21.09.1994
(73) Patentinhaber: Becromal S.p.A., I-20089 Quinto de' Stampi Rozzano (MI) (IT)
(72) Erfinder: Constanti, Jean, 78300 Poissy (FR)
(74) Vertreter: Keil, Rainer A., Dipl.-Phys. Dr.

(56) Entgegenhaltungen:
- DE-A- 2 741 178
- US-A- 4 764 181
- US-I- 280 395
- US-I-B280395 (ROBERT S. ALWITT ET AL.)

## Beschreibung

Die Erfindung betrifft ein Metallband gemäß dem Oberbegriff des Anspruchs 1.

Üblicherweise werden die Elektroden bei herkömmlichen Kondensatoren mittels einer Papierlage oder einer Kunststoffolie elektrisch voneinander getrennt. Die Herstellung solcher Kondensatoren unter Einsatz separater Trennschichten ist einerseits aufwendig und führt andererseits aufgrund der Verwendung von mindestens drei separaten Folien, nämlich den beiden Elektroden und der Trennschicht, zu Kondensatoren mit, bezogen auf die Kapazität, relativ hohem Volumen. Im Übrigen ist die Impedanz und hierbei insbesondere die Reaktanz beziehungsweise der Wirkleitwert herkömmlicher Kondensatoren nicht immer befriedigend.

In der DE-A-2 741 178 ist ein Metallband mit einem Separator, der aus einer porösen polymerhaltigen Beschichtung gebildet ist, beschrieben. Zur Herstellung eines derart beschichteten Metallbands wird dieses durch ein Bad mit flüssigem polymerhaltigen Material geführt. Die so aufgebrachte flüssige Schicht wird in einer sich anschließenden Härtungszone auf die gewünschte Dicke gebracht, geglättet und verfestigt. Dabei sind in dem polymerhaltigen Material Verbindungen aufgenommen, durch welche die Bildung von Poren in dem polymerhaltigen Material ermöglicht werden soll. Dies geschieht durch Herauslösen der Verbindung aus dem erstarrten polymerhaltigen Material in einem weiteren Lauge enthaltenden Bad, wodurch an den Einlagerungsorten der Verbindungen Poren zurückbleiben. Die Beschichtung kann auch als gesonderter Film hergestellt werden. Nach der Laugebehandlung wird das beschichtete Metallband in einer Trocknungszone getrocknet. Das auf diese Weise mit der als Separator dienenden porösen polymerhaltigen Beschichtung versehene Metallband kann als Elektrode eines Wickelkondensators verwendet werden.

In der US-I-B 280 395 ist eine Kathodenfolie für einen Elektrolytkondensator beschrieben, auf die thermoplastische Partikel zur Bildung einer Trennschicht zwischen den Elektroden des Kondensators aufgesintert sind. Zur Herstellung einer derart beschichteten Kathodenfolie werden elektrostatisch aufgeladene thermoplastische Partikel auf die Kathodenfolie aufgesprüht und anschließend gesintert. Dabei werden nur maximal 20% der Oberfläche der Kathodenfolie mit den Partikeln besprüht. Dadurch, daß mindestens 80% der Oberfläche der Kathodenfolie nicht mit Partikeln besprüht sind, entstehen dementsprechend große Poren, so daß die Trennschicht eine extrem hohe Porosität erhält. Dabei ist die Trennschicht keine poröse zusammenhängende Schicht, sondern wird aus einzelnen, nicht zusammenhängenden Partikeln gebildet, die einen Kontakt zwischen den Elektrodenfolien des Kondensators verhindern sollen.

Es ist Aufgabe der Erfindung, eine Metallband zur Herstellung der Elektrode bzw. eines Elektrolytkondensators dahingehend weiterzubilden, daß ein Kondensator einfacher und wirtschaftlicher hergestellt werden kann und verbesserte elektrische Eigenschaften hat.

Diese Aufgabe wird mit der Erfindung im wesentlichen durch ein Metallband mit den Merkmalen des Anspruchs 1 gelöst.

Durch diese Maßnahmen wird eine einfache und wirtschaftliche Herstellung des mit einer solchen Elektrode ausgestatteten Kondensators erreicht, da eine separate Trennschicht zwischen den Elektroden entfallen kann. Dadurch, daß die Trennschicht nicht als separat handhabbares Teil ausgebildet, sondern fest mit wenigstens einer der Elektroden verbunden ist, kann auch die Dicke der Trennschicht herabgesetzt werden, so daß die äußeren Abmessungen des Kondensators bei vorgegebener Kapazität verringert werden können. Ferner führt die Verwendung derartiger Metallbänder als Elektrode für Elektrolytkondensatoren zu einer Verbesserung der elektrischen Eigenschaften.

Von Vorteil ist das Metallband beidseitig mit einer mikroporigen thermoplastischen Trennschichtfolie ersehen. Durch diese Maßnahme werden die elektrischen Eigenschaften, insbesondere die Spannungsfestigkeit des mit derartigen Elektroden ausgestatteten Kondensators verbessert.

Nach einer vorteilhaften Ausgestaltung der Erfindung weist das Metallband unbeschichtete Bereiche auf, die zur Anbringung von Anschlußkontakten dienen. Die Anschlußkontakte können somit während der Herstellung des

Kondensators einfach und problemlos durch bekannte Verbindungsverfahren, wie zum Beispiel Kaltschweißen oder Ultraschallschweißen, an den unbeschichteten Bereichen fixiert werden.

Gemäß einer weiteren, vorteilhaften Ausgestaltung der Erfindung haben die Poren der Trennschichtfolie etwa gleiche Abmessungen, wie die Poren der Ätzung des Metallbandes.

Insbesondere liegt der Durchmesser der Poren vorzugsweise in einem Bereich von etwa 1,5 µm bis 5µm für alle Spannungen. Hierdurch wird sichergestellt, daß nur ein ionischer Kontakt, nicht jedoch ein Berührungskontakt zwischen den Elektroden des Kondensators hergestellt wird, für Niederspannung im allgemeinen und für Kondensatoren mit einer sehr niedrigen Impedanz sollte der Durchmesser der Poren etwa < 500 µm betragen.

Gemäß einer weiteren, vorteilhaften Ausgestaltung der Erfindung besteht die thermoplastische Schicht aus Polyethy len, Polypropylen, Polyester, Polykarbonat, Polyamid 6, Polytetrafluorethylen, Polyethylenteraphthalat oder Polyethy lenisophthalat beziehungsweise einem Kopolymer der beiden letztgenannten Stoffe.

Ein Verfahren zur Herstellung derartiger, beschichteter Metallbänder zeichnet sich erfindungsgemäß dadurch aus, daß man die mikroporige thermoplastische Trennschichtfolie mit der Metallbandoberfläche unter Verschweißen oder Verkleben zusammenbringt.

Von Vorteil rollt man das beschichtete Metallband zu einer Vorratsrolle auf, wobei über eine Steuerung des Wickelvorganges die Dicke und Porosität der Beschichtung einstellbar ist. Insbesondere kann durch eine Steuerung der Relativgeschwindigkeiten des Metallbandes bezüglich der aufzubringenden Beschichtung eine Streckung insbesondere des Beschichtungsmaterials erfolgen, so daß eine geringe Schichtdicke mit der geforderten Porosität gewährleistet werden kann.

Die Erfindung betrifft auch eine Elektrode bestehend aus einem beschichteten Metallband der oben beschriebenen Art. Dabei ist die Anode und/oder die Kathode aus dem beschichteten Metallband hergestellt. Durch den Einsatz dieser Elektroden bei einem Elektrolytkondensator lassen sich die elektrischen Eigenschaften des Elektrolytkondensators, die räumlichen Abmessungen wie auch das Herstellungsverfahren optimieren.

Von Vorteil bestehen dabei die Anode und/oder Kathode aus ein- oder beidseitig beschichtetem Metallband.

Nach einem weiteren Merkmal der Erfindung ist die Elektrode im Bereich der Kontaktierung unbeschichtet, so daß Anschlußkontakte einfach und sicher auf der Elektrode fixiert werden können. Für diesen Fall hat es sich als besonders vorteilhaft erwiesen, daß die Gegenelektrode in dem der Kontaktierung gegenüberliegenden Bereich eine Beschichtung trägt.

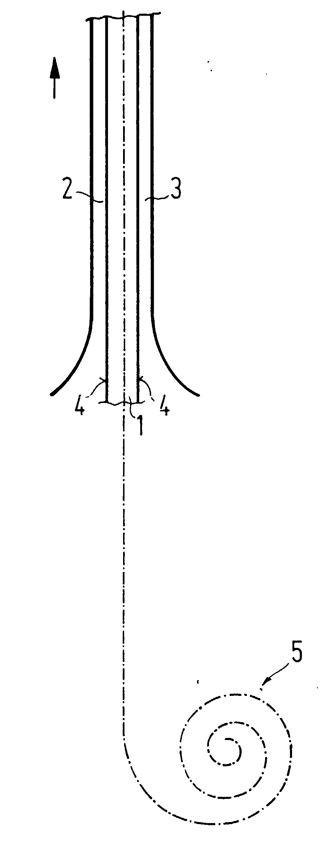

Weitere Ziele, Vorteile und Anwendungsmöglichkeiten der Erfindung ergeben sich aus der nachfolgenden Beschreibung von Ausführungsbeispielen anhand der Zeichnung.

Die einzige Figur veranschaulicht in Seitenansicht ein Ausführungsbeispiel des Herstellungsverfahrens des erfindungsgemäß beschichteten Metallbandes.

Ein Metallband 1 aus Aluminium wird von einer Bandrolle 5 abgezogen und auf den beiden Bandoberflächen 4 mit einer thermoplastischen Schicht 2 bzw. 3 versehen. Die Dicke des Metallbandes 1 liegt im Bereich von 5 µm bis 300 µm, während die aufgebrachte mikroporige thermoplastische Schicht 2 bzw. 3 eine Dicke zwischen 5 µm und 80 µm, bevorzugt etwa 15 µm bis 20 µm aufweist. Die mikroporige thermoplastische Schicht 2 bzw. 3 wird durch Verschweißen oder Verkleben auf den Bandoberflächen 4 des Metallbandes 1 aufgebracht. Dieser Vorgang findet nach dem letzten Bearbeitungs- bzw. Behandlungsschritt des Metallbandes 1 als Ätzfolie statt.

Das Metallband 1 kann einseitig oder auch beidseitig beschichtet werden, wobei auch unbeschichtete Bereiche vorgesehen werden können, die z.B. der späteren Festlegung der Anschlußkontakte dienen. Das beschichtete Metallband 1 kann als Anode und/oder Kathode in einem Elektrolykondensator eingesetzt werden, wobei die Anwendung nicht nur auf gewickelte Kondensatoren beschränkt ist, sondern sich auch auf gestapelte Kondensatoren erstreckt.

## Patentansprüche

1. Metallband (1), vorzugsweise Aluminiumband, zur Herstellung einer Elektrode für einen Elektrolytkondensator, mit einer wenigstens einseitigen und wenigstens bereichsweisen posösen thermoplastischen Beschichtung, **dadurch gekennzeichnet**, daß das Metallband eine Dicke zwischen 5 µm und 300 µm hat und die Beschichtung durch eine unter Verschweißen oder Verkleben mit der Metallbandoberfläche zusammengebrachte mikroporige thermoplastische Trennschicht (2,3) aus beim Aufbringen streckbarem Beschichtungs material gebildet wird und eine Dicke von 5µm bis 80µm aufweist.

2. Metallband nach Anspruch 1, **dadurch gekennzeichnet**, daß die mikroporige thermoplastische Trennschicht (2,3) beidseitig vorgesehen ist.

3. Metallband nach Anspruch 1 oder 2, **gekennzeichnet durch** unbeschichtete Bereiche zur Anbringung von Anschlußkontakten.

4. Metallband nach einem der vorhergehenden Ansprüche, **dadurch gekennzeichnet**, daß die Poren der Trennschicht (2,3) etwa gleiche Abmessung haben, wie die Poren einer Metallbandätzung.

5. Metallband nach einem der vorhergehenden Ansprüche, **dadurch gekennzeichnet**, daß der Durchmesser der Poren weniger als 500 µm beträgt und vorzugsweise in einem Bereich von 1,5 µm bis 5 µm liegt.

6. Metallband nach einem der vorhergehenden Ansprüche, **dadurch gekennzeichnet**, daß die thermoplastische Trennschicht (2,3) aus Polyethylen, Polypropylen, Polyester, Polytetrafluorethylen, Polykarbonat, Polyamid 6, Polyethylentheraphthalat, Polyethylenisophthalat oder einem Kopolymer der beiden letztgenannten Stoffe besteht.

7. Verfahren zur Herstellung eines beschichteten Metallbandes nach einem der Ansprüche 1 bis 6, **dadurch gekennzeichnet**, daß man die mikroporige thermoplastische Trennschicht (2,3) nach Behandlung des Metallbandes (1) als Ätzfolie mit der Metallbandoberfläche (4) unter Verschweißen oder Verkleben zusammenbringt.

8. Verfahren nach Anspruch 7, **dadurch gekennzeichnet**, daß man das Metallband nach der Beschichtung zu einer Vorratsrolle aufrollt, wobei über eine Steuerung des Wickelvorganges die Dicke und Porosität der Beschichtung einstellbar sind.

9. Elektrode für einen Elektrolytkondensator bestehend aus einem beschichteten Metallband nach einem der Ansprüche 1 bis 6, **dadurch gekennzeichnet**, daß das beschichtete Metallband als Anode und/oder Kathode ausgebildet ist.

10. Elektrode nach Anspruch 9, **dadurch gekennzeichnet**, daß die Anode und/oder Kathode aus ein- oder beidseitig beschichtetem Metallband bestehen.

11. Elektrode nach Anspruch 9 oder 10, **dadurch gekennzeichnet**, daß die Anode und/oder Kathode im Bereich der Kontaktierung unbeschichtet ist.

## Claims

1. Metal strip (1) preferably aluminium strip for production of an electrode for an electrolytic capacitor, with a thermoplastic coating at least on one side which is porous at least in parts, characterised in that the metal strip has a thickness between 5 pm and 300 pm and the coating is formed by a micro-porous thermoplastic separating layer (2, 3) bonded to the metal strip surface by welding or adhesion and made of coating material which can stretch on application and has a thickness of 5 µm to 80 µm.

2. Metal strip according to claim 1, characterised in that the micro-porous thermoplastic separating layer (2, 3) is provided on both sides.

3. Metal strip according to claim 1 or 2, characterised by uncoated areas for the application of connection contacts.

4. Metal strip according to any of the previous claims, characterised in that the pores of the separating layer (2, 3) have approximately the same dimensions as the pores of a metal strip etching.

5. Metal strip according to any of the previous claims characterised in that the diameter of the pores is less than 500 µm and preferably lies in a range from 1.5 µm to 5 µm.

6. Metal strip according to any of the previous claims, characterised in that the thermoplastic separating layer (2, 3) consists of polyethylene, polypropylene, polyester, polytetrafluoroethylene, polycarbonate, polyamide 6, polyethylene terephthalate, polyethylene isophthalate or a copolymer of the two latter substances.

7. Process for production of a coated metal strip according to any of claims 1 to 6, characterised in that after treatment of the metal strip (1) as etching foil, the micro-porous thermoplastic separating layer (2, 3) is bonded to the metal strip surface (4) by welding or adhesion.

8. Process according to claim 7, characterised in that after coating, the metal strip is rolled into a storage roll where the thickness and porosity of the coating can be set by controlling the winding process.

9. Electrode for an electrolytic capacitor consisting of a coated metal strip according to any of claims 1 to 6, characterised in that the coated metal strip is formed as an anode and/or cathode.

10. Electrode according to claim 9, characterised in that the anode and/or cathode consists of a metal strip coated on one or both sides.

11. Electrode according to claim 9 or 10, characterised in that the anode and/or cathode is uncoated in the area of the contacts.

## Revendications

1. Bande métallique (1), de préférence bande d'aluminium, pour la fabrication d'une électrode pour un condensateur électrolytique, avec un revêtement thermoplastique poreux au moins d'un côté et au moins sectoriellement, **caractérisée** en ce que la bande métallique a une épaisseur comprise entre 5 µm et 300 µm, et le revêtement est formé par une couche séparatrice (2, 3) thermoplastique microporeuse, assemblée par soudage ou collage à la surface de la bande métallique et constituée d'un matériau de revêtement étirable lors de l'application, et présente une épaisseur de 5 µm à 80 µm.

2. Bande métallique selon la revendication 1, **caractérisée** en ce que la couche séparatrice (2, 3) thermoplastique microporeuse est prévue des deux côtés.

3. Bande métallique selon la revendication 1 ou 2, **caractérisée** par des zones non revêtues pour la mise en place de contacts de raccordement.

4. Bande métallique selon une des revendications précédentes, **caractérisée** en ce que les pores de la couche séparatrice (2, 3) ont environ les mêmes dimensions que les pores d'une gravure de bande métallique.

5. Bande métallique selon une des revendications précédentes, **caractérisée** en ce que le diamètre des pores est inférieur à 500 µm, et de préférence compris entre 1,5 µm et 5 µm.

6. Bande métallique selon une des revendications précédentes, **caractérisée** en ce que la couche séparatrice thermoplastique (2, 3) est constituée de polyéthylène, de polypropylène, de polyester, de polytétrafluoréthylène, de polycarbonate, de polyamide 6, de polyéthylènetéréphtalate, de polyéthylène-isophtalate ou d'un copolymère des deux dernières matières citées.

7. Procédé de fabrication d'une bande métallique revêtue selon une des revendications 1 à 6, **caractérisé** en ce qu'on assemble la couche séparatrice (2, 3) thermoplastique microporeuse à la surface (4) de la bande métallique par soudage ou collage après traitement de la bande métallique (1) comme film de gravure.

8. Procédé selon la revendication 7, **caractérisé** en ce que, à la suite du revêtement, on roule la bande métallique sur une bobine de stockage, la commande du processus d'enroulement permettant de régler l'épaisseur et la porosité du revêtement.

9. Electrode pour un condensateur électrolytique constitué d'une bande métallique revêtue selon une des revendications 1 à 6, **caractérisée** en ce que la bande métallique revêtue est conçue comme anode et/ou comme cathode.

10. Electrode selon la revendication 9, **caractérisée** en ce que l'anode et/ou la cathode sont constituées d'une bande métallique revêtue d'un côté ou des deux côtés.

11. Electrode selon la revendication 9 ou 10, **caractérisée** en ce que l'anode et/ou la cathode ne sont pas revêtues dans la région de la mise en contact.
